# EUROPEAN PATENT APPLICATION

(11) **EP 1 076 450 A2**
(43) Date of publication of application: **14.02.2001**
(21) Application number: 00306885.5
(22) Date of filing: 11.08.2000
(51) Int. Cl.: H04N 1/04

(54) **Reduction of dust impression**

(30) Priority: 11.08.1999 US 372569
(71) Applicant: CreoScitex Corporation Ltd., Herzlia 46103 (IL)
(72) Inventor: Yannai, Moshe, Caesaria 39800 (IL)
(74) Representative: Freed, Arthur Woolf

(57) **Abstract**

In order to reduce the amount of dust impressions on a scanned image, the dust is removed from the depth of field of the optical system. In a first embodiment, the removal is done by using a thick upper cover glass. In a second embodiment, two parallel thinner glasses are used, forming between them a clean space

## Description

### FIELD OF THE INVENTION

The present invention is related to scanners generally and, in particular, to the reduction of dust impressions on the resulting image.

### BACKGROUND OF THE INVENTION

When scanning an image to generate a digital representation thereof, dust particles that are present during the procedure often show up in the digital image.

Although dust is removed from the scanned object and from the optical surfaces of the image scanner prior to scanning by means of cloths, cleaning fluids and compressed air, it is impossible to get rid of all the dust. In particular, between the time of cleaning and the time of scanning, dust accumulates on the upper surface of the upper glass holding the object. This dust contributes most of the dust impressions in the captured image.

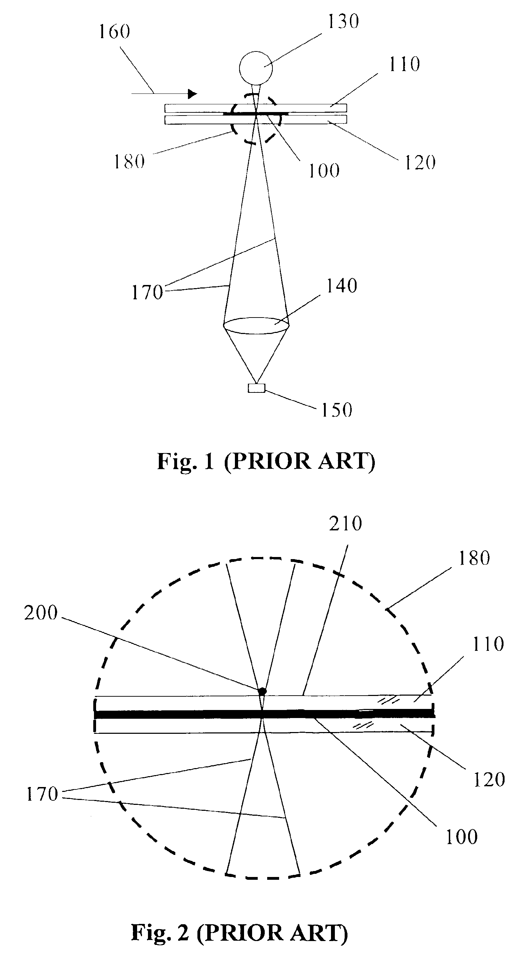

Reference is now made to Fig. 1, which demonstrates the prior-art optical system of a scanner. An object 100, such as a color transparency, is mounted between a cover glass 110 and a base glass 120. A light source 130, such as a fluorescent lamp tube having the longitudinal axis perpendicular to the plane of the drawing, illuminates object 100. Light is collected by a lens 140. An image of object 100 is formed at the focal plane of a linear sensor 150. The longitudinal axis of sensor 150 is parallel to the longitudinal axis of light source 130. Sensor 150 scans the object by moving relative to the object and reading one line of pixels at a time. The sandwich comprising cover glass 110, object 100 and base glass 120 moves in the direction of arrow 160, allowing sensor 150 to successively read many lines, thus providing coverage of the complete object 100. Light rays 170 describe the numerical aperture of the light captured by the optical system of the scanner.

Reference is now made to Fig. 2, which is an enlargement of a section 180 of Fig. 1. Fig. 2 illustrates the dust problem of the prior art. Particle 200 is a dust element that landed on an upper surface 210 of cover glass 110. Since the upper surface of cover glass 110 is the only surface facing upwards, dust tends to land on that surface.

During a scan, when the relative motion of the sensor and the object places the particle 200 in the path of the imaged line, as shown in Fig. 2, particle 200 blocks a portion of the light rays enclosed between rays 170. Since particle 200 is in the neighborhood of the depth of field of the optical system of the scanner, the capture process results in a relatively sharp, high contrast impression of particle 200 onto the digitally captured image.

During processing of the digital image, the relatively sharp edges of the impression of particle 200 are enhanced and the effect on the digital image becomes accentuated and unpleasing to the eye.

Numerous image-processing tools for handling the problem have been suggested by the graphic arts industry. These methods are manual or semi-automatic and thus require at least quality control intervention by a skilled operator. Smart Touch of Scitex Corporation Ltd., Herzlia, Israel is a tool for removing the impression of dust after the image has been captured. This tool is more effective when there are few dust impressions on the processed image.

The Brush tool available in PhotoShop from Adobe Systems Incorporated, San Jose, California USA, is another tool useful for eliminating dust impressions from a captured image. However, it requires a lot of manual manipulation.

The main disadvantages of the prevailing dust impression removal methods are the image-processing time, the cost of operator intervention, and the possible effect on image quality, resulting from the fact that the correction actually changes the image data. As a result, special handling for removing this effect with digital tools is required. This is a time consuming operation that reduces the productivity of image capturing.

### SUMMARY OF THE INVENTION

It is an object of the present invention to reduce the effect of dust accumulated on the upper surface of a glass holding an object to be imaged and to provide a captured image with lesser dust impressions.

In a preferred embodiment of the present invention, the thickness of the upper glass is increased to a level that removes the dust accumulated on the upper surface from the depth of field of the optical system.

In another embodiment of the invention, the upper cover of the object is made out of two glass plates, separated by a clean and enclosed space. This configuration likewise acts to remove the dust from the depth of field but weighs less than the first solution.

### BRIEF DESCRIPTION OF THE DRAWINGS

The invention will be herein described in a manner of example, with references to accompanying drawings, wherein:
Fig. 1 is a schematic illustration of a prior-art optical system;
Fig. 2 is a schematic illustration of a dust problem associated with the optical system of Fig. 1;
Fig. 3 is a schematic illustration of a first embodiment of the invention, using a thick cover glass;
Fig. 4 is a schematic illustration of a second embodiment of the invention using a double glass structure for reducing the weight of the cover glass; and
Fig. 5 is a schematic illustration of the use of the double glass structure in conjunction with dust.

### DETAILED DESCRIPTION OF THE PRESENT INVENTION

The present invention provides means for reducing the amount of dust impressions on images captured by scanners.

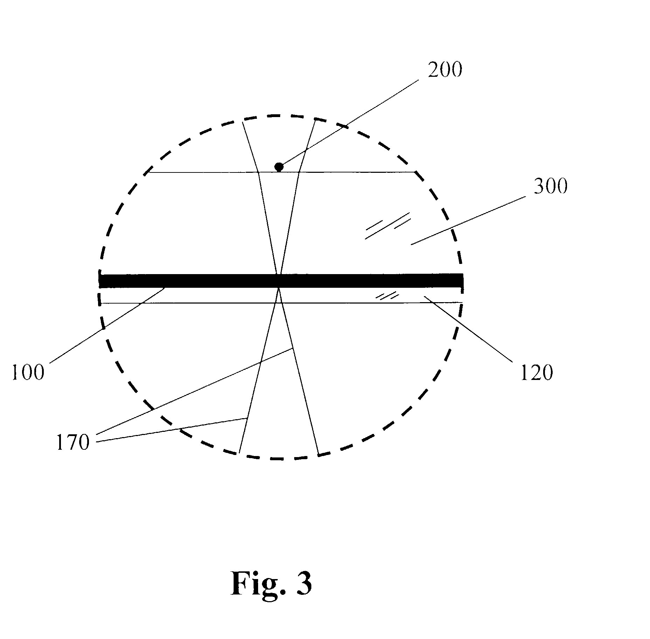

Reference is made to Fig. 3, which shows one preferred embodiment of the present invention. In this embodiment, cover glass 110 of the prior art (Fig. 1 and Fig. 2) is replaced by a thick cover glass 300. As a result, particle 200 is removed away from the object plane and out of the depth of field of the scanner's optical system. At this position, particle 200 cannot block a significant amount of the light between light rays 170. The resultant impression of particle 200 on the acquired digital image is out of focus and of very low contrast. Having diffused edges, the impression is not enhanced by the sharpening process of the digital image. As a result, the impression of particle 200 remains invisible in the final image.

The degree of diffusion of the impression depends on the numerical aperture of the optical system, the thickness of cover glass 300 and the optical index of refraction of cover glass 300. The calculation of these parameters is well known to those skilled in the art of geometrical optics. An exemplary embodiment has a lens of 20mm in diameter, lens-to-object distance of 220mm and a cover glass that is 10mm thick with an optical refractive index of 1.51.

The main disadvantage of the above embodiment lies in the constraints that it imposes on the mechanical system holding cover glass 300; namely, in order to achieve the desired results, cover glass 300 will be thicker if:
- a glass with higher refraction index chosen; or
- a lens with smaller diameter and longer lens-object distance is chosen.
In either case, a thicker glass has the added disadvantage of being heavier.

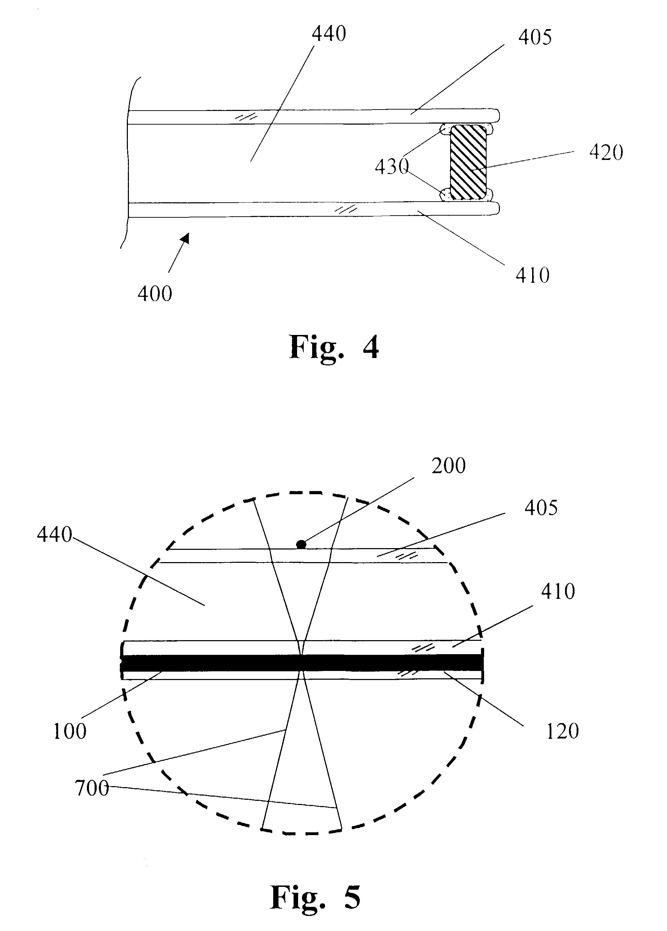

These problems are overcome in another preferred embodiment of the present invention, described with reference to Fig. 4. In this embodiment, the thick glass 300 is replaced by a double-glass unit 400. Double-glass unit 400 comprises two thin glass plates 405 and 410, mounted in parallel, a spacer-frame 420 and sealing glue 430. The spacer-frame 420 and the sealing glue 430 provide a closed and isolated space 440. Space 440 is cleaned during the assembly stage and, being isolated, has no dust particles therein. The double glass unit 400 may comprise two glasses of 3mm thickness, thus reducing the weight of the cover glass by 40% relative to the aforementioned 10mm thick glass.

Reference is made now to Fig. 5, showing the function of the double glass unit 400 in the scanning process. Dust particle 200 is located away from the depth of field of the optical system of the scanner. Due to space 440, the effective index of refraction is smaller than the refractive index of the thick glass 300. This provides the same effect as a single glass of lower thickness. Having the same overall thickness as a single thick glass structure, the double glass structure provides a more effective reduction of dust impressions, by removing the dust particles out of the depth of field of the optical system, and yet using thin glasses which are preferable to thick glasses, as explained hereinabove.

It will be appreciated that the embodiments described hereinabove are provided by way of examples and that the scope of the invention is not limited by this description. Rather, the scope of the invention is defined only by the claims hereinbelow.

## Claims

1. A scanner for scanning an object, the scanner comprising:
a sensor for scanning said object;
an optical system for imaging said object onto said sensor, said optical system having a depth of field; and
a device for holding said object, said device comprising a transparent cover placed on top of said object;
wherein an upper surface of said transparent cover is out of the depth of field of said optical system.

2. The scanner according to claim 1, wherein said transparent cover has a thickness large enough to place said upper surface out of the depth of field of said optical system.

3. The scanner according to claim 1 wherein said transparent cover comprises two transparent plates.

4. The scanner according to claim 3, wherein said two transparent plates are separated and are generally parallel to each other.

5. The scanner according to claim 4, wherein said two transparent plates are separated by a spacer.

6. The scanner according to claim 5, additionally comprising an isolating material enclosing the space between said transparent plates, operative to prevent penetration of dust into said space.
